# EUROPEAN PATENT SPECIFICATION

(11) **EP 4 432 974 B1**
(45) Date of publication and mention of the grant of the patent: **10.09.2025**
(21) Application number: 22818219.2
(22) Date of filing: 11.11.2022
(51) Int. Cl.: A61C 17/34

(54) **SYSTEMS AND METHODS FOR CONTROLLING POWER TAPPING MOTION**
SYSTEME UND VERFAHREN ZUR STEUERUNG DER KRAFTABGRIFFSBEWEGUNG
SYSTÈMES ET PROCÉDÉS DE COMMANDE DE LA PUISSANCE DE MOUVEMENT DE TAPOTEMENT

(30) Priority: 20.11.2021 US 202163281653 P
(43) Date of publication of application: 25.09.2024
(73) Proprietor: Koninklijke Philips N.V., 5656 AG Eindhoven (NL)
(72) Inventor: AHLMAN, Dave, 5656 AG Eindhoven (NL); VOLMER, Jasper C, 5656 AG Eindhoven (NL); STORCH, David Robert, 5656 AG Eindhoven (NL); UBACHS, Rene Leonardus Jacobus Marie, 5656 AG Eindhoven (NL); BARINK, Marco, 5656 AG Eindhoven (NL); LEE, Sungsoo, 5656 AG Eindhoven (NL); ADRIAENSEN, Guido Antonius Theodorus, 5656 AG Eindhoven (NL); BENNING, Wolter F., 5656 AG Eindhoven (NL); ALBRIGHT, Ethan, 5656 AG Eindhoven (NL); WILLIAMS, Kayleigh, 5656 AG Eindhoven (NL); WEICHSLER, Walter Julius, 5656 AG Eindhoven (NL); FOSTER, Regan Starkey, 5656 AG Eindhoven (NL)
(74) Representative: Philips Intellectual Property & Standards
(86) International application number: PCT/EP2022/081604
(87) International publication number: WO 2023/088800

(56) References cited:
- US-A1- 2010 132 139
- US-A1- 2013 025 080
- US-A1- 2018 145 576

## Description

### Field of the Disclosure

The present disclosure is directed generally to oral cleaning devices and systems for generating controllable sweeping and power tapping motions to achieve high performance cleansing results.

### Background

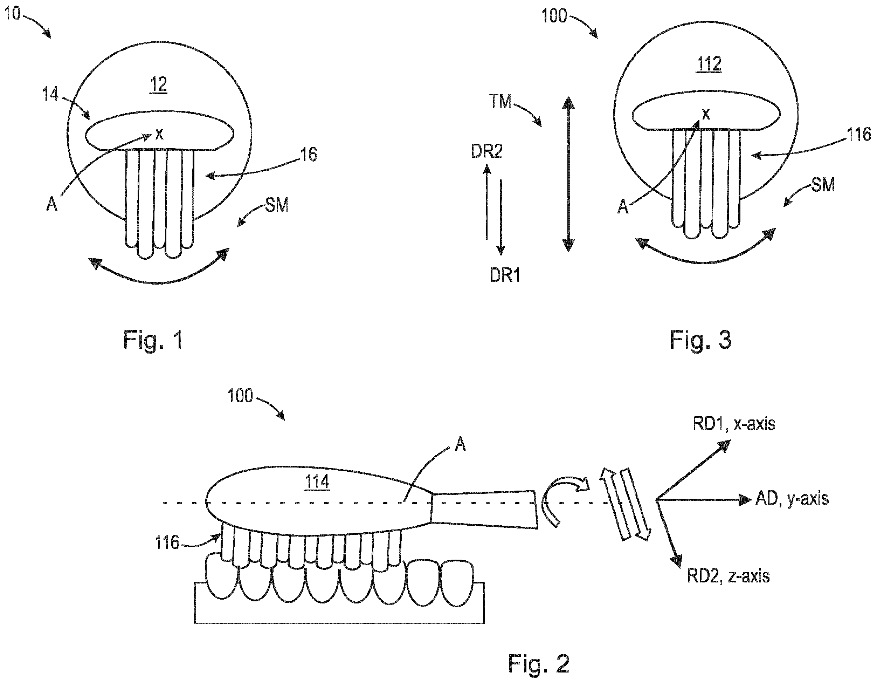

Current modern oral cleaning devices use rotary motion about a central axis of the brush head. This motion is known as a sweeping motion. A simplified schematic representation of a modern oral cleaning device such as a power toothbrush is shown in FIG. 1. As shown in FIG. 1, power toothbrush 10 has a handle 12 and a brush head 14. Bristles 16 are shown extending from brush head 14. In use, brush head 14 is driven by a drive system contained within handle 12. The bristles are typically rotated by the drive system about central axis A in a sweeping motion SM. The sweeping motion is typically embodied as movement that is linear, rotational, or a combination of both linear and rotational and the movement is tangential to the direction that the bristles are facing.

Unfortunately, toothbrush devices that employ the sweeping motion alone are not optimized for all target areas in the mouth (e.g., interproximal areas, gumline areas, incisor surfaces, molar surfaces, and overall surface areas of the teeth). Achieving proper cleaning performance at all target areas depends on a number of factors, including toothbrush layout, motion of the toothbrush, and user handling. Although manufacturers can control toothbrush layout or design, it is challenging to design a toothbrush that performs optimally at all target areas due to conflicting requirements for the different areas. Consequently, toothbrushes can have non-optimal performance at certain areas of interest. Although consumers could ideally use different types of toothbrushes to achieve the best cleaning in all the target areas, consumers only employ a single toothbrush device for daily oral care routines.

Thus, there is a need in the art for improved oral cleaning devices and systems that achieve stain and/or plaque removal and gum health objectives. There is also a need in the art for improved oral cleaning devices and systems that optimize different drivetrain motions to target specific areas of the mouth.

US 2013/025080 A1 describes an oscillatory system for a motorized drive unit for the generation of a rotary oscillatory movement. The system includes a first oscillatory component and a second oscillatory component, the components capable of oscillating relative to one another.

US 2010/132139 A1 describes a toothbrush drive including a first drive component for generating a magnetic field and a second drive component driven in both a translational and rotational manner under the influence of the magnetic field.

US 2018/145576 A1 describes a vibration motor for an electric hand-held appliance provided with a first drive element, a second drive element and at least one spring element coupling the first drive element to the second drive element.

### Summary of the Disclosure

The present disclosure is directed generally to inventive drivetrain assemblies that can be applied to an electric or powered oral cleaning device, such as, an electric toothbrush. The inventive systems achieve improved stain and/or plaque removal and gum health objectives by precisely and controllably generating a power tapping motion by itself or in combination with a sweeping motion. Various embodiments and implementations herein are directed to an improved drivetrain assembly that utilizes an electromagnetic assembly having a plurality of conductors configured to periodically rotate a drivetrain shaft in a first direction about a central axis of the device and periodically drive the drivetrain shaft in a second direction, different from the first direction, so that a set of cleaning elements that are attached to a cleaning unit move in a vertical up-down motion (i.e., a tapping motion). Applicant has recognized and appreciated that a combination of the sweeping motion and the tapping motion is beneficial for certain areas of the mouth and, yet for certain other areas, e.g., the gumline area, it is advantageous to turn off the sweeping motion and substitute it with the tapping motion only.

In one aspect, there is provided an oral cleaning device according to claim 1.

According to an embodiment, the set of cleaning elements are configured to move at an amplitude greater than 0.5 mm and less than 3 mm and a frequency greater than 0.25 Hz and less than 520 Hz in the first direction or the second direction.

According to an embodiment, the first axis is a central axis (A) of the oral cleaning device.

According to an embodiment, the body portion further includes an input that is operable by a user to select a mode of operation; and by selecting the mode of operation, the electromagnetic assembly (i) ceases periodically driving the drivetrain shaft in the first direction and continues to periodically drive the drivetrain shaft in the second direction; or (ii) ceases periodically driving the drivetrain shaft in the second direction and continues to periodically drive the drivetrain shaft in the first direction.

According to an embodiment, the oral cleaning device further includes a sensor configured to detect angle information at which the cleaning elements are positioned relative to one or more tooth or gum surfaces of a mouth of a user; and a processor configured to: receive the detected angle information from the sensor; determine, based on the received detected angle information, that the cleaning elements are proximate to a cleaning area of the mouth of the user; and select a mode of operation of the electromagnetic assembly where the drivetrain shaft is periodically driven in the first direction only or the second direction only.

According to an embodiment, the cleaning area is a gumline area or an interdental area.

According to an embodiment, the oral cleaning device further includes a resonator connected to the drivetrain shaft, wherein the resonator is configured to rotate about the first axis; a resilient member having a first end and a second end and a pivot point, wherein the resilient member is connected, at its first end, to the resonator; and a magnet connected to the second end of the resilient member; wherein the electromagnetic assembly further comprises first and second conductors configured to interact with the magnet to periodically drive the drivetrain shaft and thereby the cleaning unit in the first direction about or along the first axis.

According to an embodiment, the electromagnetic assembly further comprises third and fourth conductors arranged in parallel with the first and second conductors, and wherein the third and fourth conductors are configured to interact with the magnet to periodically drive the drivetrain shaft and thereby the cleaning unit in the second direction about or along the second axis. In another aspect, there is provided a drivetrain assembly for an oral cleaning device according to claim 9.

According to an embodiment, the set of cleaning elements are configured to move at an amplitude greater than 0.5 mm and less than 3 mm and a frequency greater than 0.25 Hz and less than 520 Hz in the second direction.

According to an embodiment, the electromagnetic assembly is configured to cease periodically driving the drivetrain shaft in the first direction in response to user input received at an input in the body portion of the oral cleaning device.

According to an embodiment, the electromagnetic assembly is configured to cease periodically driving the drivetrain shaft in the first direction or the second direction in response to a sensor signal received from a sensor, wherein the sensor signal is indicative of angle information at which the set of cleaning elements are positioned relative to one or more tooth or gum surfaces.

According to an embodiment, the electromagnetic assembly is configured to cease periodically driving the drivetrain shaft in the first direction or the second direction after a certain amount of time has passed during a cleaning routine.

In various implementations, a processor or controller may be associated with one or more storage media (generically referred to herein as "memory," e.g., volatile, and non-volatile computer memory such as RAM, PROM, EPROM, and EEPROM, floppy disks, compact disks, optical disks, magnetic tape, etc.). In some implementations, the storage media may be encoded with one or more programs that, when executed on one or more processors and/or controllers, perform at least some of the functions discussed herein. Various storage media may be fixed within a processor or controller or may be transportable, such that the one or more programs stored thereon can be loaded into a processor or controller so as to implement various aspects as discussed herein. The terms "program" or "computer program" are used herein in a generic sense to refer to any type of computer code (e.g., software or microcode) that can be employed to program one or more processors or controllers.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

These and other aspects of the various embodiments will be apparent from and elucidated with reference to the embodiment(s) described hereinafter.

### Brief Description of the Drawings

In the drawings, like reference characters generally refer to the same parts throughout the different views. Also, the drawings are not necessarily to scale, emphasis instead generally being placed upon illustrating the principles of the various embodiments.
FIG. 1 is a simplified schematic representation of a modern oral cleaning device employing a sweeping motion.
FIG. 2 is a simplified schematic representation of a portion of an oral cleaning device using a tapping motion, according to aspects of the present disclosure.
FIG. 3 is a simplified schematic representation of an end view of an oral cleaning device configured to employ sweeping and tapping motions, according to aspects of the present disclosure.
FIG. 4 is a diagrammatic representation of critical parameters of frequency and amplitude for an oral cleaning device using a periodic pulsing (i.e., tapping) motion, according to aspects of the present disclosure.
FIG. 5 shows a graphical representation of example sweeping and tapping amplitudes, according to aspects of the present disclosure.
FIG. 6 is a schematic representation of an oral cleaning device, according to aspects of the present disclosure.
FIG. 7 is a schematic representation of a portion of a drivetrain assembly of an oral cleaning device configured to employ a sweeping motion, according to aspects of the present disclosure.
FIG. 8 is a schematic representation of a portion of a drivetrain assembly of an oral cleaning device configured to employ a sweeping motion and a tapping motion together and separately, according to aspects of the present disclosure.
FIG. 9 is a schematic representation of the magnet and conductors of the portion of the drivetrain assembly shown in FIG. 8, according to aspects of the present disclosure.
FIG. 10 is a flowchart illustrating a method of operating an oral cleaning device, such as a power toothbrush device, according to aspects of the present disclosure.

### Detailed Description of Embodiments

The present disclosure describes various embodiments of improved systems for driving brush heads of electric or powered oral cleaning devices, such as, electric toothbrushes or shavers and the like. Applicant has recognized and appreciated that oral cleaning devices can provide improved cleansing performance at critical areas of the user's mouth by dynamically modifying an output of a drivetrain assembly of the device. The drivetrain assembly can be driven to move the cleaning elements (i.e., bristles) of the device in a vertical periodic motion that is parallel to the direction of the cleaning elements, where the amplitude of the vertical motion is equal to or greater than 0.25 mm (referred to herein as "power tapping"). As used herein, the term "vertical" does not mean an absolute direction with respect to the ground, but instead is used to indicate a relative direction of movement illustrated in the Figures. In certain areas of the mouth, the drivetrain assembly can also be driven to move the cleaning elements in the vertical motion in combination with a sweeping periodic rotational motion about a central axis of the device. As described herein, the inventive power tapping motion within oral cleaning devices: (i) achieves deeper reach in gum pockets to remove subgingival plaque, (ii) achieves higher peak forces at surfaces which improve plaque and/or stain removal, (iii) prevents pinning of bristle tufts which improves plaque removal by restoring beneficial tuft sweeping behavior, (iv) achieves more resilience to variables of use like toothbrush placement, toothbrush angle, and toothbrush pressure, and (v) provides new options for experiential modes for the consumer. Accordingly, the improved systems described or otherwise envisioned herein provide an oral cleaning device with a drivetrain assembly that precisely controls the power tapping motion either coupled with or decoupled from precisely controlled sweeping movements. The improved drivetrain assembly comprises an electromagnetic assembly configured to (i) drive a drivetrain shaft and a cleaning unit having cleaning elements in a first direction about a central axis of the device; and (ii) drive the drivetrain shaft and the cleaning unit and cleaning elements in a second direction, different than the first direction, so that the cleaning elements move in a vertical up-down motion (i.e., a tapping or pulsing motion). While the combination of motions (i.e., sweeping and tapping motions) are beneficial for plaque removal in some areas of the mouth, it is advantageous to substitute the sweeping motion with the tapping motion only in certain other areas of the mouth (i.e., the gumline areas).

A particular goal of utilization of the embodiments and implementations herein is to provide a mechanism to provide a power tapping motion in an oral cleaning device like, e.g., a Philips Sonicare^{™} electric toothbrush (manufactured by Koninklijke Philips N.V.). However, the components of the device may be utilized with many other personal care devices, including oral care devices, oral cleaning devices, flossers, skin cleaners, and many other devices. This disclosure should not be limited by the specific embodiments depicted and described.

As shown in FIG. 2, a simplified schematic representation of a portion of an oral cleaning device 100, e.g., a power toothbrush device, configured to generate a sweeping motion and/or a tapping motion is provided. Oral cleaning device 100 comprises cleaning unit 104, e.g., a brush head 114 and cleaning elements 116, e.g., bristles, which can be driven to rotate about central axis A and pulse or tap in direction RD2. The directions provided in FIG. 2 are included to demonstrate the spatial terminology used in the art and the present application. As used herein, the term "vertical" means the direction indicated. Axial direction AD is parallel to central axis A and extends along a y-axis of the device 100. Radial direction RD1 is orthogonal to central axis A and radial direction RD2 and extends along an x-axis of the device 100. Radial direction RD2 is orthogonal to both axial direction AD and radial direction RD1, parallel to the axes of the cleaning elements 116 depicted, and extends along a z-axis of the device 100. The power tapping motion described herein refers to controllable movement of the cleaning unit and/or cleaning elements in radial direction RD2. In other words, the power tapping motion refers to motion of the cleaning elements that is parallel to an axis of alignment of the cleaning elements. The sweeping motion refers to rotary and/or linear motion of the cleaning elements that is perpendicular to the axis of alignment of the cleaning elements. In embodiments, the power tapping motion refers to controllable movement of the cleaning unit and/or cleaning elements in radial direction RD2 by rotating the drivetrain shaft about an axis extending in radial direction RD1 (i.e., about an x-axis of the device).

Referring to FIG. 3, a schematic representation of an end view of an oral cleaning device 100 is provided. As discussed in greater detail herein, oral cleaning device 100 can be configured to turn on and off the sweeping and/or tapping motions (SM and TM) for optimizing motion to a specific region that a particular motion is most beneficial for. In some cases, the particular motion comprises either the sweeping motion alone or the tapping motion alone. In other cases, the particular motion comprises some combination of the sweeping motion and the tapping motion. The combination of the sweeping and tapping motions refers to a summation (i.e., a cumulative act, motion, or effect) of sweeps or strokes and pulses or taps. The sweeps or strokes are directed in direction SM (which would be in a direction between occlusal surfaces, i.e., biting surfaces, and the gumline when the toothbrush is held with the bristle tips pointing toward a buccal side of the teeth. The pulses or taps are directed in the vertical direction TM (which would be a lingual to facial direction when the toothbrush is held with the bristle tips pointing toward the buccal side of the teeth). In embodiments, the toothbrush is held with the bristle tips pointing toward the teeth at a 45 degree angle. As used herein, the tapping motion is defined as vertical periodic movement (i.e., direction TM) that is equal to or greater than 0.25 mm in amplitude. In embodiments, the tapping motion alone can be used for the lower lingual anterior region of the mouth. A small power tapping motion (i.e., a tapping motion with an amplitude on the smaller side of the critical range described herein) can be used with the sweeping motion for the buccal anterior region of the mouth. Alternatively, the sweeping motion alone can be used for the buccal anterior region of the mouth. A large power tapping motion (i.e., a tapping motion with higher amplitudes of the critical range described herein) can achieve better reach at interproximal regions in-between teeth with or without the sweeping motion. The power tapping motion having specific parameters can have particular applicability when used by itself for the gumline areas as further described herein.

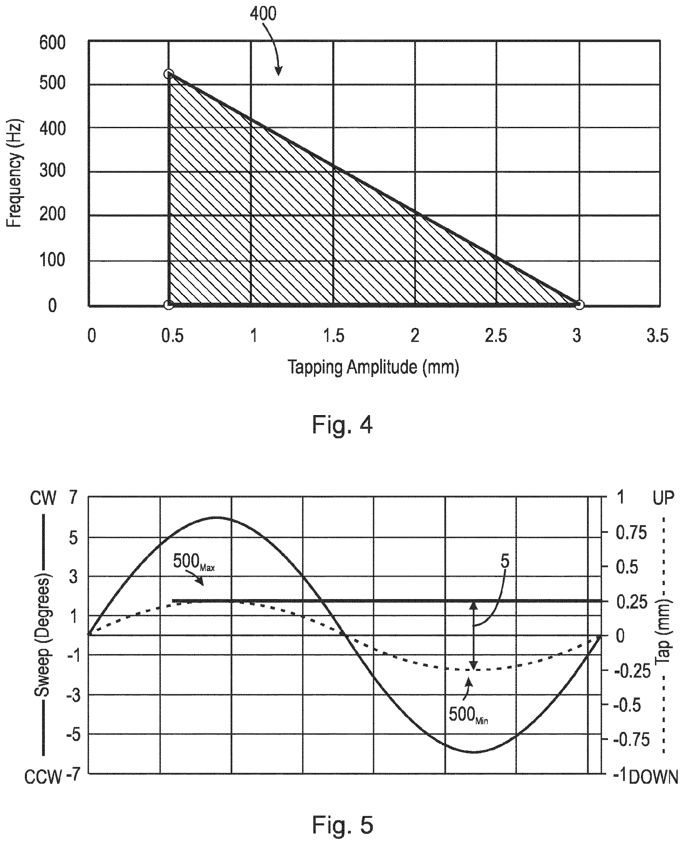

FIG. 4 shows a graphical "Golden Triangle" that represents the optimal operating regions for the power tapping parameters when used with a personal care device such as an oral cleaning device or a power toothbrush device. When the optimal operating tapping parameters are combined with the optimal sweeping parameters, the "Golden Triangle" becomes a "Golden Pyramid." The abscissa of FIG. 4 shows the tapping amplitudes which can include movement of the tips of the cleaning elements or bristles, while the ordinate shows the tapping frequencies which can include movement of the tips of the cleaning elements or bristles. The term frequency refers to a number of cycles for a given time interval, e.g., a second. The term amplitude refers to (i) a peak amplitude which can comprise a maximum absolute value of a signal, or (ii) a peak-to-peak amplitude which can comprise the absolute value between a highest peak and a lowest peak as used herein. While the desired range of amplitudes for the power tapping motion is from around 0.25 mm to around 3 mm, the power tapping motion generally comprises a periodic vertical motion equal to or greater than 0.5 mm.

In embodiments, the desired range of amplitudes for the power tapping motion is from around ±0.25 mm to around ±3 mm, where the power tapping motion generally comprises a periodic vertical motion equal to or greater than 0.5 mm. Amplitudes that are higher than ±3 mm (i.e., beyond the right-most point of region 400) are not desired due to a risk of tooth chatter, where the platen of a toothbrush device can impact the occlusal surfaces of the opposing jaw. Additionally, amplitudes that are higher than ±3 mm can cause undesired vibration of oral and nasal tissues, as well as an unpleasant sensation on the treated surfaces. Frequencies that are lower than 0.25 Hz would be too slow to be efficacious. Frequencies that are higher than 520 Hz would be over double the primary resonant frequency and are not desirable. It should be appreciated that a recommended oral care routine lasts for 2 minutes and, when considering an average of 32 teeth, there is approximately 3.75 seconds per tooth available during the recommended oral care routine. Thus, if the incidence of the power tapping motion is slower than 4 seconds, then it is too slow to be applied uniformly throughout the mouth (i.e., at every interproximal spot). Accordingly, in preferred embodiments, the incidence of the power tapping motion occurs at least every 3.75 seconds (i.e., a frequency of approximately 0.27 Hz). In embodiments, the minimal frequency may be approximately 2 Hz (i.e., at least every 0.5 seconds). In further embodiments, in order for a user to experience the power tapping motion uniformly throughout the mouth (i.e., at every interproximal spot and/or at each tooth), the power tapping motion can occur multiple times during each pass over a single tooth. Thus, the requisite frequency would be approximately 20 Hz (i.e., at least every 0.05 seconds). Of course, if an oral care routine is shorter than or longer than 2 minutes, it should be appreciated that the incidence of the power tapping motion may be adjusted accordingly so that the incidence of the power tapping motion occurs uniformly throughout the oral care routine. In other embodiments, it should be appreciated that it may be desired to have the incidence of the power tapping motion occur inconsistently or nonuniformly due to an analysis of particular areas where the tapping motion is more beneficial than other areas, for example.

In example embodiments, the sweeping motion is combined with the tapping motion having an amplitude of 0.25 mm and, the addition of the tapping motion can generate a 1% improvement in the gumline areas, a 3% improvement in the interdental areas, and a 1% overall improvement in cleaning performance considering coverage of all surfaces to be cleaned. However, Applicant has recognized and appreciated that when the tapping motion is set to a peak-to-peak amplitude of approximately 0.5 mm and a frequency of approximately 250 Hz, the tapping motion alone achieves a significant improvement in cleaning performance in the gumline areas, over a combination of the tapping motion with a sweeping motion having a 2.5 or 5 degree rotational amplitude. This is because the sweeping motion prevents the cleaning elements or bristles from entering the gumline area (i.e., the gum-tooth meeting space or the space where the gum meets the tooth). In embodiments, the tapping motion alone with the previous parameters can achieve an 18.5% improvement in cleaning performance in the gumline areas, over a combination of the tapping motion with a sweeping motion having a 2.5 or 5 degree rotational amplitude. Critically, the peak-to-peak amplitude of approximately 0.5 mm is measured between adjacent maximum and minimum peaks of a single cycle of the tapping motion. Thus, the peak-to-peak amplitude of approximately 0.5 mm can include 0.25 mm above a reference value and 0.25 mm below the reference value as shown in FIG. 5. The peak-to-peak amplitude of approximately 0.5 mm is shown between maximum peak 500_{Max} and minimum peak 500_{Min}. The maximum and minimum peaks are adjacent to each other within the cycle shown in FIG. 5 and the peak-to-peak amplitude is measured at distance 5. In other embodiments, the tapping motion is set to an amplitude of approximately 1.0 mm and a frequency of approximately 500 Hz. Such an embodiment also provides an improvement in cleaning performance in the gumline areas, over a combination of the tapping motion with a sweeping motion having a 2.5 degree rotational amplitude.

The tapping motion improves the performance of the sweeping motion by untrapping or unpinning the bristle tufts. Bristle trapping or pinning is a phenomena where, under heavy loads with the sweeping motion alone, the bristles can become constrained or trapped such that they no longer freely move according to the sweeping motion delivered by the drivetrain. When the user applies too much load when brushing, the bristle tufts can become partially constrained in their movement on the surface of the teeth. As a result of the constraint, the sweeping motion is reduced and the cleaning performance can suffer. When the user applies even more load, the bristle tufts can become trapped or pinned where the tufts do not move at all when brushing. As a result of the trapped or pinned bristles, there is no sweeping motion and the user derives no benefit from the sweeping motion from the drivetrain assembly. When bristles are constrained or trapped, the cleaning benefits only resume when the user manually moves the product to a new orientation and frees the bristles from the heavy loads.

The sweeping motion performs best when the bristles touch the surface of the tooth and can move freely along large surface areas without being constrained. When brushing with sweeping and tapping motions together, the bristle tufts splay out as the load increases or as the brush head moves in direction DR1 due to the drivetrain assembly generating the vertical up-down movement (i.e., the power tapping motion). As the load increases due to the force exerted from the drivetrain assembly or otherwise due to user applied load for example, the tufts can become more and more constrained. However, if the amplitude of the brush head movement in direction DR1 is large enough, the large amplitude movement can cause buckling of a constrained or trapped bristle and effectively release or unload the bristle. Thus, the addition of the tapping motion of a sufficiently large amplitude to the sweeping motion allows the bristles to move with more freedom, thereby improving cleaning performance.

Critically, when the brush head moves in direction DR2 during the periodic tapping motion, the behavior reverses and as the load decreases further, the tufts become less and less constrained. The tapping motion can allow the tufts to cover a larger surface area during the sweeping motion and improve plaque removal by restoring the beneficial sweeping motion.

The addition of the tapping motion to the sweeping motion also achieves a deeper reach in gum pockets to remove subgingival plaque. Within gum pockets, the addition of the tapping motion achieves improved cleaning performance on marginal areas, interproximal areas, mesial areas, and buccal areas, and an improved overall cleaning performance. In example embodiments, the deeper reach and improved cleaning performance is achieved under a 30 degree roll angle, a 45 degree roll angle, or a 60 degree roll angle, or any suitable roll angle. Thus, the addition of the tapping motion renders the cleaning efficiency of the brush to be more robust to user orientation, and less dependent on the user's technique, than using the sweeping motion alone.

The improved cleaning performance can be achieved by using the critical operating parameters for the tapping motion discussed herein. While a variety of drivetrain assemblies can be implemented to generate the tapping motion, we will discuss one exemplary assembly below merely to illustrate how the invention can be implemented and practiced.

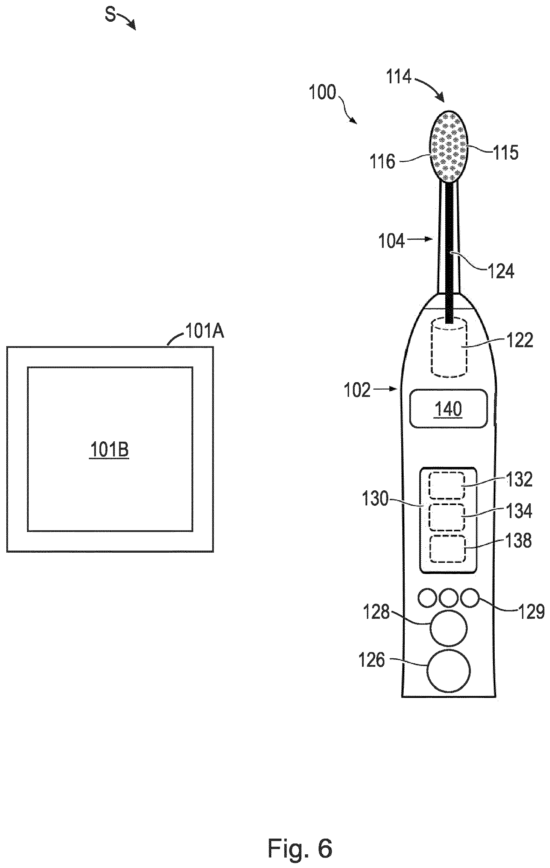

Referring to FIG. 6, an example oral cleaning device 100 including a body portion 102 with a housing and a cleaning unit 104 mounted on the body portion 102 is provided. Device 100 is represented as part of a system S for employing sweeping and/or tapping motions to achieve optimal cleaning performance for all the target areas of the user's mouth. Cleaning unit or member 104 includes at its end remote from the body portion 102, a brush head 114. Brush head 114 includes bristle face 115, which provides a plurality of cleaning elements 116 or bristles. According to an embodiment, the cleaning elements or bristles extend along an axis substantially perpendicular to the unit's axis of elongation, although many other embodiments of the cleaning unit and cleaning elements are possible.

Cleaning unit 104, brush head 114, and/or bristle face 115 are mounted so as to be able to move relative to the body portion housing 102. The movement can be any of a variety of different movements, including vibrations or rotation, among others. According to one embodiment, cleaning unit 104 is mounted to the body portion housing 102 so as to be able to vibrate relative to body portion housing 102, or, as another example, brush head 114 is mounted to cleaning unit 104 so as to be able to vibrate relative to body portion housing 102, or, as another example, bristle face 115 is mounted to cleaning unit 104 so as to be able to vibrate relative to body portion housing 102. The cleaning unit 104 can be fixedly mounted onto body portion housing 102, or it may alternatively be detachably mounted so that cleaning unit 104 can be replaced with a new one when the cleaning elements or bristles or another component of the device are worn out and require replacement.

The body portion includes a drivetrain assembly 122 with an actuator or motor for generating movement and a transmission component 124, or shaft, for transmitting the generated movements to cleaning unit 104. For example, drivetrain assembly 122 comprises a motor or electromagnet(s) that generates movement of drivetrain shaft 124, which is subsequently transmitted to the cleaning unit 104. Drivetrain and motor 122 can include components such as a power supply, an oscillator, and one or more electromagnets, among other components. In this embodiment the power supply comprises one or more rechargeable batteries, not shown, which can, for example, be electrically charged in a charging holder in which oral cleaning device 100 is placed when not in use.

The body portion is further provided with a user input 126 to activate and de-activate drivetrain assembly 122. The user input 126 allows a user to operate the toothbrush 100, for example, to turn the toothbrush 100 on and off. The user input 126 may, for example, be a button, touch screen, user interface, or switch. The body portion can further be provided with a mode input 128 for selecting different operating modes which are selectable by the user. Mode input 128 allows a user to operate the toothbrush 100, for example, to switch between different modes of the drivetrain assembly 122. Mode input 128 may, for example, be a button, touch screen, user interface, or switch. Indicators 129 such as light emitting diodes (LEDs) or any suitable alternative can also be included in the body portion for indicating whether the device is on and which of the different operating modes is selected for example. Indicators 129 can also be used to direct the user to focus on particular areas of the user's mouth as described herein.

The body portion of the device also comprises a controller 130. Controller 130 may be formed of one or multiple modules, and is configured to operate the oral cleaning device 100 in response to an input, such as input obtained via user input 126 or an input from one or more sensors within the device. Controller 130 can comprise, for example, a processor 132 and a memory 134, and can optionally include a connectivity module 138. The processor 132 may take any suitable form, including but not limited to a microcontroller, multiple microcontrollers, circuitry, a single processor, or plural processors. The memory 134 can take any suitable form, including a non-volatile memory and/or RAM. The non-volatile memory may include read only memory (ROM), a hard disk drive (HDD), or a solid state drive (SSD). The memory can store, among other things, an operating system as well as sensor data from sensor(s). The RAM is used by the processor for the temporary storage of data. According to an embodiment, an operating system may contain code which, when executed by controller 130, controls operation of the hardware components of oral cleaning device 100. According to an embodiment, connectivity module 138 transmits collected sensor data, and can be any module, device, or means capable of transmitting a wired or wireless signal, including but not limited to a Wi-Fi, Bluetooth, near field communication, and/or cellular module.

In embodiments, the body portion of the device also comprises one or more sensors 140. While the sensor(s) are shown within body portion 102, the one or more sensors may be located anywhere within the device, including for example within cleaning unit 104 or head member 114. According to embodiments, sensor(s) can be integral with controller 130. In embodiments, sensor 140 is configured to generate information indicative of the acceleration and/or angular orientation of device 100 relative to the user's teeth. Sensor 140 can comprise an inertial motion sensor such as an accelerometer, gyroscope, or magnetic sensor. According to an embodiment, sensor 140 is configured to provide readings of six axes of relative motion (three axes translation and three axes rotation), using for example a 3-axis gyroscope and a 3-axis accelerometer. As another example, sensor 140 is configured to provide the readings of nine axes of relative motion using, for example, a 3-axis gyroscope, a 3-axis accelerometer, and a 3-axis magnetometer. Other sensors may be utilized alone or in conjunction with these sensors, including but not limited to a pressure sensor and other types of sensors, such as a capacitive sensor, a camera, a photocell, a clock, a timer, and other types of sensors. Many different types of sensors could be utilized, as described or otherwise envisioned herein. Sensor 140 can comprise two or more sensors that function together as a 6-axis or 9-axis spatial sensor system.

According to embodiments, the controller 130 can be programmed and/or configured to dynamically modify an output of the drivetrain assembly 122 such that the motion of the cleaning elements of the cleaning unit adapt to particular parts of the user's mouth. The use of different operating modes based on where the cleaning unit is located in the mouth improves the cleaning performance of the device for that particular space in the user's mouth.

System S may further comprise a computing device 101A, which may include a processor and a non-transitory storage medium, containing program code to cause the processor to execute an algorithm in accordance with the various embodiments described herein. Computing device 101A may be a general purpose computer, a mobile device, a custom dedicated computing device, or any other computing device capable of storing and executing the program described herein. The program operated by computing device 101A may be a mobile application, which may also be configured to display a graphical interface 101B of a model of user's teeth. In alternate embodiments, computing device 101A may cooperate with a mobile application or with another application, for displaying a model of the user's teeth.

The improved cleaning performance can be achieved by using the critical operating parameters for the tapping motion discussed herein. While a variety of drivetrain assemblies can be implemented to generate the tapping motion, we will discuss an exemplary assembly below merely to illustrate how the invention can be implemented and practiced.

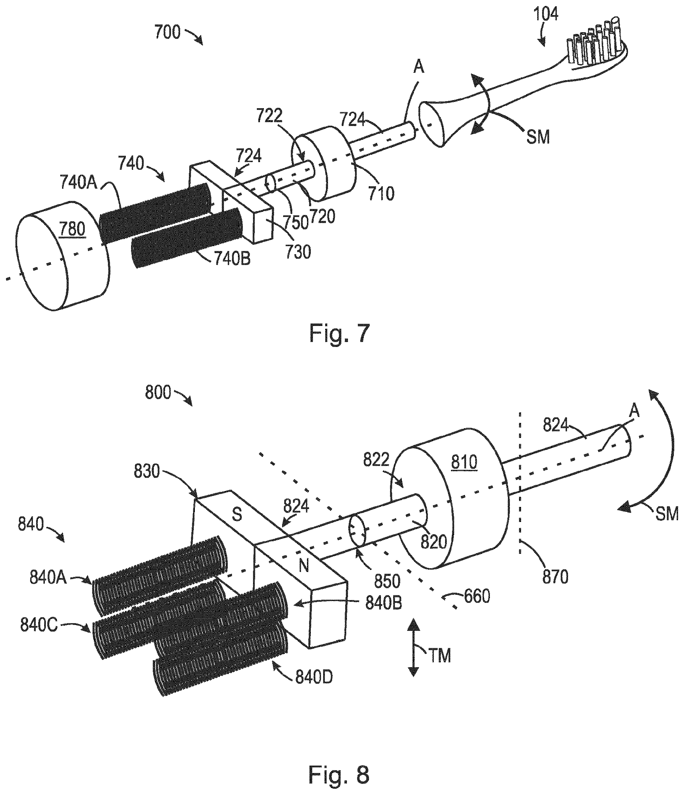

Referring to FIG. 7, in one embodiment, a schematic drivetrain assembly 700 of an oral cleaning device is provided with an electromagnetic assembly for generating periodic rotational movement (i.e., the sweeping motion). The drivetrain assembly 700 broadly comprises resonator or load mass 710, resilient member 720, magnet 730, and electromagnetic assembly 740. The load mass or resonator 710, which can be cleaning unit 104 or connected to cleaning unit 104, can be connected to a drivetrain shaft 724 (e.g., shaft 124) to transmit vibrations to a cleaning unit (e.g., member 104). Resonator 710 is also connected to end 722 of resilient member 720, which can be any suitable spring, such as, a tension spring, a torsion spring, a compression spring, a leaf spring, a V-shaped spring, a U-shaped spring, or any of a variety of different spring shapes, types, and sizes. Magnet 730 is mounted on end 724 of resilient member 720, and an actuator comprising an electromagnetic assembly 740 is arranged to interact with magnet 730. End 724 of magnet 730 is opposite end 722. The electromagnetic assembly 740 is connected to a power source and circuit board assembly 780 for controlling the electromagnetic fields generated by the conductors. Magnet 730 can be any suitable permanent magnet, such as, neodymium and silicon magnets. The electromagnetic assembly 740 can comprise any suitable conductor made of any suitable nonmagnetic material such as copper, aluminum, etc., or any combination thereof. Although FIG. 7 shows the electromagnetic assembly 740 as coils, it should be appreciated that any suitable geometry or substitute component is contemplated.

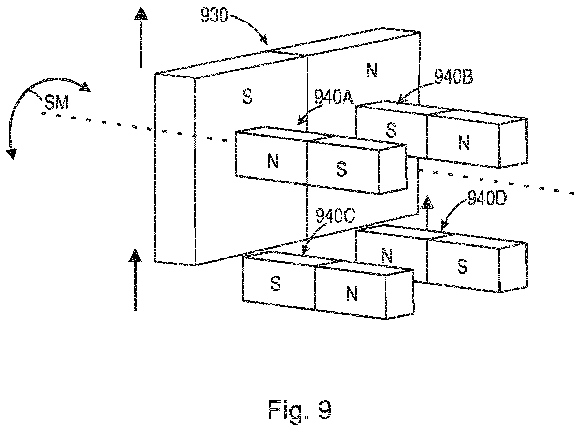

Resonator 710 is configured to rotate about central axis A to periodically move a cleaning unit and its cleaning elements in sweeping motion SM. To generate the rotational sweeping motion SM, first and second conductors 740A and 740B of the electromagnet assembly 740 are configured to generate electromagnetic fields to interact with the north and south poles of magnet 730. In other words, the drivetrain assembly 700 can generate switching currents in the conductive coils which alternate the directions of the electromagnetic fields and cause magnet 730 to rotate about axis A in sweeping motion SM. With reference to FIG. 9, magnet 930 represents magnet 730 and conductors 940A and 940B represent conductors 740A and 740B. Due to the orientation of the north and south poles of magnet 930, the polarities of conductors 940A and 940B can be alternated to push and pull magnet 930 about central axis A in sweeping motion SM. Reversing the polarities of conductors 940A and 940B forces the magnet 930 about central axis A and switching back the polarities of conductors 940A and 940B to the orientation shown in FIG. 9 would pull the magnet 930 back to the default orientation. Pivot point 750 in FIG. 7 reverses the sweeping movement thereby allowing balancing of the movement or reaction forces by utilizing the eigenfrequency, or natural frequency. As magnet 730, 330 rotates, so do resilient member 720 and resonator 710 and thus, the connected cleaning unit and cleaning elements also rotate about central axis A in sweeping motion SM.

The electromagnetic assembly shown in FIG. 7 can be modified by adding third and fourth conductors 840C and 840D as shown in the electromagnetic assembly 840 in FIG. 8. The third and fourth conductors 840C and 840D are also configured to generate electromagnetic fields to interact with the north and south poles of magnet 830 to cause magnet 830 to move. Yet, due to the configuration of conductors 840C and 840D relative to magnet 830, the additional conductors cause magnet 830 to move in a vertical up-down motion (i.e., a tapping motion TM) instead of a sweeping rotational motion. It should be appreciated that conductors 840C and 840D can be used to move magnet 830 in the tapping motion TM while first and second conductors 840A and 840B are moving the magnet 830 in the sweeping motion SM. Conductors 940C and 940D in FIG. 9 represent conductors 840C and 840D. The configuration of conductors 940C and 940D shown in FIG. 9 is able to force magnet 930 in the upward vertical direction shown. While conductors 940A and 940B are arranged substantially around the middle or central points of the south and north poles of magnet 930, respectively, conductors 940C and 940D are arranged proximate to or below the bottom sides of the south and north poles of magnet 930, respectively. Pivot point 850 in FIG. 8 also reverses the movement in the upward vertical direction thereby allowing balancing of the movement or reaction forces by utilizing the eigenfrequency, or natural frequency. Additionally, the reversal of the polarities of conductors 940C and 940D from the configuration shown in FIG. 9 attracts magnet 930 in the downward vertical direction.

Pivot point 850 is located along axis A within resilient member 820 in the embodiment depicted. Pivot point 850 is depicted as an imaginary point within resilient member 820 that reverses the sweeping motion SM and/or the tapping motion TM. Pivot point 850 allows for the balancing of the movement or reaction forces by utilizing the natural frequency or eigenfrequency of drivetrain assembly 800. It should be appreciated that although pivot point 850 is an imaginary point in FIGS. 8 and 9, in alternate embodiments, pivot point 850 can be embodied as a structural pivot that reverses the sweeping and/or tapping movement. Additionally, it should be appreciated that pivot point 850 can be arranged at different points along axis A in different embodiments.

The configuration of drivetrain assembly 800 allows freedom of rotary motion for the cleaning unit and cleaning elements about the x- and y-axes of the oral cleaning device, while limiting rotation about the z-axis and translation in the y-axial direction. Freedom of rotation about the x-axis refers to rotation about axis 860. Freedom of rotation about the y-axis refers to rotation about the central axis A. The z-axis refers to axis 870 or an axis extending in radial direction RD2. Axis 860 is perpendicular to central axis A and passes through pivot point 850 in FIG. 8 however, axis 860 can be arranged along different points of axis A.

As described herein, the various motions described or otherwise envisioned herein can be implemented within a single oral cleaning device so that the device can perform optimally at all target areas of the user's mouth (e.g., gumline, interproximal, and overall surfaces) depending on how the motions are activated. In one embodiment, the device can be configured to use a summation or combination of sweeping and tapping motions to target large surfaces of the teeth and, only tapping motions to target gumline areas. The controller 130 of the device can be programmed at the factory with different operating modes (e.g., a mode for large surface areas, a mode for gumline areas, a mode for interproximal areas, etc.) Applicant has recognized and appreciated that, for the gumline areas, it is beneficial to switch off the sweeping motion and use only the tapping motion with the particular parameters described or otherwise contemplated herein.

In order to allow a user to take advantage of two or more operating modes within a single brushing routine, an oral cleaning device can include mode input (e.g., input 128) that is selectable by a user. For example, when the user is operating the device during a brushing routine the user can select a first operating mode for interproximal areas and a second operating mode, different than the first operating mode, for gumline areas. The first operating mode can include a large power tapping motion with a sweeping motion and the second operating mode can include a tapping motion alone without any sweeping motion. In other embodiments, turning on the device to start a brushing routine automatically activates a first default or normal operating mode and, during the brushing routine, a user can switch from the default or normal first operating mode to one or more different operating modes.

In an example embodiment, after a user turns on the device and the drivetrain assembly 122 is activated, the central LED of indicators 129 can be illuminated to indicate the first default or normal operating mode. When the user wants to focus on the gumline areas during the brushing routine, for example, the user can push input 128 to select one or more different operating modes of the device. Each time input 128 is pressed a different indicator of indicators 129 can be illuminated to signify which mode has been activated. In an embodiment, the left LED of indicators 129 corresponds with a gumline mode and the right LED of indicators 129 corresponds with an interproximal mode. Of course, the LED indicators can be reversed to indicate the gumline and interproximal modes. Additionally, it should be appreciated that the configuration and location of the indicators 129 can be modified without departing from the spirit of the disclosure. When the user no longer wants to focus on the gumline areas during the brushing routing, the user can push input 128 to select one or more other operating modes of the device. In alternate embodiments, the gumline mode, or any selectable mode for that matter, can automatically stop after a certain predetermined period of time and the normal or default mode can be activated again automatically.

In other embodiments, instead of requiring the user to switch the operating modes manually, the device can automatically switch between different operating modes based on where the user is holding the cleaning unit and/or the cleaning elements in the mouth relative to different areas of the mouth. For example, when the user turns on the device, a first operating mode of the drivetrain assembly can be activated. When the device detects the cleaning unit and/or the cleaning elements is contacting or in alignment with a cleaning area (i.e., a brushing area such as a gumline area) of the mouth, the controller 130 can automatically deactivate the first operating mode and activate a second operating mode such that the first operating mode is substituted with the second operating mode.

To accomplish this, the controller 130 can receive input (i.e., sensor data) from sensor 140 of the device 100, which can directly or indirectly measure a tilt or an angle of the cleaning unit and/or the cleaning elements relative to the teeth or gum surfaces. Controller 130 can receive the sensor data in real-time or periodically. In embodiments, sensor 140 may send a constant stream of sensor data to controller 130 for storage and/or analysis, or may temporarily store and aggregate or process data prior to sending it to controller 130. Once received by controller 130, the sensor data can be processed by processor 132 and the processor can direct the modification of the operating modes of the device 100 accordingly. In embodiments, during a period of time during a brushing routine when the cleaning elements of the cleaning unit are contacting or aligned with the gumline, the controller 130 can automatically switch to a particular operating mode that is most beneficial for such area. In other words, sensor 140 can be configured to detect angle information at which the cleaning elements are positioned relative to one or more tooth or gum surfaces, and controller 130 can (i) determine, based on the detected angle information, that the cleaning elements are proximate to a cleaning area of the mouth of the user; and (ii) select a mode of operation of the electromagnetic assembly based on the determination. The selected mode of operation can involve the drivetrain shaft periodically being driven in the first direction only or the second direction only in embodiments. In further embodiments, the angle information can be detected by one sensor and another sensor, i.e., a pressure sensor, can be used to detect whether the cleaning elements are at least partially in contact with the one or more tooth or gum surfaces. Both the detected angle information and the pressure sensor data can be used together to allow controller 130 to select a mode of operation of the electromagnetic assembly that is beneficial for a particular area of the mouth of the user. In embodiments, the operating mode comprises a tapping motion only. In embodiments, the operating mode comprises a sweeping motion only. When the cleaning elements of the cleaning unit are no longer contacting or aligned with the gumline, the controller 130 can automatically switch off the gumline operating mode and revert back to a default operating mode.

In a further embodiment, a user can use the device 100 in combination with an application on a screen such as graphical interface 101B. Throughout a cleaning routine, the graphical interface 101B can display a model of a user's teeth and directions guiding the user to particular parts of the oral cavity to focus on in accordance with a preprogrammed operating system of the device. The directions can be embodied as textual prompts on the graphical interface, for example "gumline area." Alternatively, the direction can be embodied as non-textual prompts on the graphical interface, such as, arrows pointing to the areas to focus on or color-coded highlighting directing the user's attention to particular areas to focus on or any suitable alternative. The controller 130 can receive input (i.e., sensor data) from sensor 140 to determine when the user complies with the direction from the graphical interface and switch between operating modes accordingly. Thus, if the user is supposed to focus on gumline areas for example, and the controller receives input indicating the cleaning elements are contacting or aligned with the gumline areas, the controller 130 modifies the operating mode or otherwise modifies an output of the drivetrain assembly 122 to optimize the cleaning performance of the oral cleaning device for that particular area. The modification can comprise activating a tapping motion as described or otherwise contemplated herein to substitute any previously activated sweeping motion for gumline areas. In an example, the modification comprises ceasing the periodic driving of the drivetrain shaft about a central axis of the device.

In a further embodiment, the controller 130 can receive input from a timer or clock to determine an amount of time that has elapsed from the start of a cleaning routine, and, after a certain amount of time has passed, switch between operating modes of the cleaning device accordingly. For example, turning on the device to start a cleaning routine can automatically activate a first default or normal operating mode and, after a certain amount of time has passed during the cleaning routine, the controller can automatically switch from the first default or normal operating mode to a second different operating mode. The second different operating mode can be based on a part of the user's mouth as indicated on the graphical interface 101B, for example. The second different operating mode can be additionally or alternatively based on input from sensor 140, for example. The user can be alerted that the certain amount of time has passed during the cleaning routine by a suitable vibration using the drivetrain assemblies described or otherwise envisioned herein. The user can be alerted that the certain amount of time has passed during the cleaning routine by a light and/or sound additionally or alternatively to the vibration. Different modes can also be switched in order. In a particular embodiment, the controller 130 can switch from a first operating mode to a second operating mode after a first amount of time has passed during a cleaning routine. After a second amount of time has passed during the cleaning routine, the controller 130 can switch from the second operating mode to a third operating mode. The first and second amounts of time can be the same or different. Moreover, it should be appreciated that the first operating mode can be different than the second operating mode and the second operating mode can be different than the third operating mode, however, the first operating mode can be the same or different than the third operating mode. With respect to the first and second amounts of time, the first amount of time can be measured from the start of a cleaning routine and the second amount of time can be measured from the end of the first amount of time or the start of the cleaning routine.

In a further embodiment, one or more indicators 129 on the body portion of device 100 can be used to indicate which area the user should focus on. For example, throughout a cleaning routine, each of the LEDs can be illuminated when the particular target area associated with that LED should be brushed. If the left LED of indicators 129 corresponds with a gumline mode, then the left LED can be illuminated continuously or configured to emit flashes of light in a pattern during a period of time in which the user is supposed to target the gumline area with the device 100. The period of time can be based on input from sensor 140. Instead of using on-off behavior or flashes of light, the LEDs can be illuminated in particular colors to indicate which area the user should focus on. For example, to direct a user to focus on the gumline area during a cleaning routine, the LEDs corresponding to the other areas (e.g., interproximal etc.) can be illuminated in red and only the LED corresponding to the gumline area can be illuminated in green. When the user is supposed to focus on the interproximal area instead of the gumline area, the LED corresponding to the gumline area can be switched from green to red and the LED corresponding to the interproximal area can be switched from red to green. Of course, it should be appreciated that the colors can vary with different embodiments.

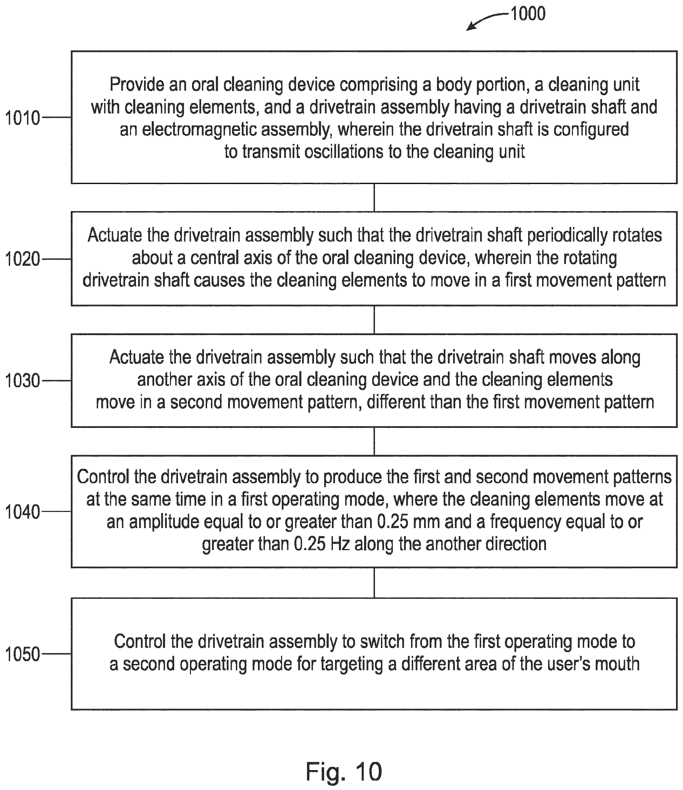

FIG. 10 depicts a flowchart illustrating a method 1000 of operating an oral cleaning device according to an exemplary embodiment where the device controllably produces the sweeping and tapping motions to optimize cleaning performance for the target areas of the mouth.

The method begins at step 1010, where an oral cleaning device is provided. The oral cleaning device includes a body portion, a cleaning unit, i.e., a brush head member, a controller, and a drivetrain assembly as described or otherwise contemplated herein. The cleaning unit comprises a set of cleaning elements or bristles extending from the cleaning unit in a cleaning element direction or bristle direction. The drivetrain assembly comprises an actuator configured to generate periodic rotational movement about a central axis of the oral cleaning device and a drivetrain shaft configured to transmit the periodic rotational movement to the cleaning unit. The drivetrain assembly is also configured to generate and transmit periodic linear movement to the cleaning unit. The cleaning elements of the cleaning unit are configured to move in first and second different movement patterns due to the transmitted periodic rotational movement and the periodic linear movement.

At step 1020, the drivetrain assembly is actuated to drive the drivetrain shaft about a central axis A of the oral cleaning device. Driving the drivetrain shaft causes the cleaning elements of the cleaning unit to move in a first movement pattern where the first movement pattern comprises a first direction about the central axis of the oral cleaning device. The first movement pattern can embody any of the sweeping motions described or otherwise contemplated herein, but should not be limited to only those depicted. Any suitable actuator can oscillate the sweeping shaft about central axis A, for example, the electromagnetic assembly described herein.

At step 1030, the drivetrain assembly is actuated to drive the drivetrain shaft about another axis of the oral cleaning device where the another axis is different than and perpendicular to the central axis A. In embodiments, the another axis is an x-axis of the oral cleaning device. Driving the drivetrain shaft in this way causes the cleaning elements of the cleaning unit to move in a second movement pattern where the second movement pattern comprises a second direction that is different than the first direction described in step 1020. The second direction refers to a direction along a z-axis of the oral cleaning device or along a direction parallel to at least some of the cleaning elements. The second movement pattern can embody any of the tapping motions described herein, but should not be limited to only those described or otherwise depicted. Any suitable actuator can translate the sweeping shaft about the x-axis and along the z-axis, for example, the electromagnetic assembly described herein.

At step 1040, the controller controls the drivetrain assembly to produce the first and second movement patterns at the same time in a first operation mode (e.g., an interproximal mode, or an overall mode) during a single brushing routine. The first movement pattern refers to the sweeping motion component. The second movement pattern refers to the tapping motion component where the cleaning elements move at an amplitude equal to or greater than 0.25 mm and a frequency equal to or greater than 0.25 Hz in the direction that is parallel to the z-axis of the device.

At step 1050, during the same single brushing routine, the controller controls the drivetrain assembly to switch from the first operation mode to a second operation mode such that the cleaning elements adapt to a particular part of the user's mouth. Like the first operation mode that comprises a combination of the first and second movement patterns to target a particular area of the user's mouth, the second operation mode also comprises either or both of the first and second movement patterns, yet one or more movement patterns of the second operation mode are different than the combination of movement patterns used for the first operation mode so that the second operation mode targets a different area of the user's mouth than the first operation mode. Thus, if the first operation mode is an overall mode, the second operation mode can be a gumline mode, for example. In an example embodiment, the first operation mode comprises a summation of a sweeping motion and a tapping motion predefined to target larger surface areas of the teeth and the second operation mode comprises only a tapping motion predefined to target gumline areas.

The operational effect of the oral cleaning devices described herein is that they can provide improved cleansing performance at critical areas of the mouth by driving the cleaning elements of the device in a vertical periodic motion that is parallel to the direction of the cleaning elements, where the amplitude of the vertical motion is equal to or greater than 0.25 mm (i.e., power tapping). The inventive power tapping motion within oral cleaning devices: (i) achieves deeper reach in gum pockets to remove subgingival plaque, (ii) achieves higher peak forces at surfaces which improve plaque and/or stain removal, (iii) prevents pinning of bristle tufts which improves plaque removal by restoring beneficial tuft sweeping behavior, (iv) achieves more resilience to variables of use like toothbrush placement, toothbrush angle, and toothbrush pressure, and (v) provides new options for experiential modes for the consumer.

All definitions, as defined and used herein, should be understood to control over dictionary definitions, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

It should also be understood that, unless clearly indicated to the contrary, in any methods claimed herein that include more than one step or act, the order of the steps or acts of the method is not necessarily limited to the order in which the steps or acts of the method are recited.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

## Claims

1. An oral cleaning device (100), comprising:
a cleaning unit (104) having a set of cleaning elements (116);
a body portion (102) coupled with the cleaning unit; and
a drivetrain assembly (122) arranged within the body portion, the drivetrain assembly comprising:
a drivetrain shaft (124) at least partially contained within the body portion and configured to engage the cleaning unit; and
an electromagnetic assembly (740, 840) configured to: (i) periodically drive the drivetrain shaft and thereby the cleaning unit in a first direction about or along a first axis of the oral cleaning device; and (ii) periodically drive the drivetrain shaft and thereby the cleaning unit in a second direction about or along a second axis of the oral cleaning device, wherein the second direction is different than the first direction and wherein the second axis is perpendicular to the first axis;
wherein the electromagnetic assembly is configured to cease periodically driving the drivetrain shaft in the first direction while continuing to periodically drive the drivetrain shaft in the second direction; or
the electromagnetic assembly is configured to cease periodically driving the drivetrain shaft in the second direction while continuing to periodically drive the drivetrain shaft in the first direction.

2. The oral cleaning device of claim 1, wherein the set of cleaning elements are configured to move at an amplitude greater than 0.5 mm and less than 3 mm and a frequency greater than 0.25 Hz and less than 520 Hz in the first direction or the second direction.

3. The oral cleaning device of claim 1, wherein the first axis is a central axis (A) of the oral cleaning device.

4. The oral cleaning device of claim 1, wherein the body portion further includes an input (128) that is operable by a user to select a mode of operation; and
by selecting the mode of operation, the electromagnetic assembly (i) ceases periodically driving the drivetrain shaft in the first direction and continues to periodically drive the drivetrain shaft in the second direction; or (ii) ceases periodically driving the drivetrain shaft in the second direction and continues to periodically drive the drivetrain shaft in the first direction.

5. The oral cleaning device of claim 1, further comprising:
a sensor (140) configured to detect angle information at which the cleaning elements are positioned relative to one or more tooth or gum surfaces of a mouth of a user; and
a processor (132) configured to:
receive the detected angle information from the sensor;
determine, based on the received detected angle information, that the cleaning elements are proximate to a cleaning area of the mouth of the user; and
select a mode of operation of the electromagnetic assembly where the drivetrain shaft is periodically driven in the first direction only or the second direction only.

6. The oral cleaning device of claim 5, wherein the cleaning area is a gumline area or an interdental area.

7. The oral cleaning device of claim 1, further comprising:
a resonator (710, 810) connected to the drivetrain shaft, wherein the resonator is configured to rotate about the first axis;
a resilient member (720, 820) having a first end (722, 822) and a second end (724, 824) and a pivot point (750, 850), wherein the resilient member is connected, at its first end, to the resonator; and
a magnet (730, 830) connected to the second end of the resilient member;
wherein the electromagnetic assembly further comprises first and second conductors (740A, 740B, 840A, 840B) configured to interact with the magnet to periodically drive the drivetrain shaft and thereby the cleaning unit in the first direction about or along the first axis.

8. The oral cleaning device of claim 7, wherein the electromagnetic assembly further comprises third and fourth conductors (740C, 740D, 840C, 840D) arranged in parallel with the first and second conductors, and wherein the third and fourth conductors are configured to interact with the magnet to periodically drive the drivetrain shaft and thereby the cleaning unit in the second direction about or along the second axis.

9. A drivetrain assembly (122, 700) for an oral cleaning device (100), the oral cleaning device having a body portion (102), the drivetrain assembly comprising:
a drivetrain shaft (124, 724) at least partially contained within the body portion and configured to engage a cleaning unit (104) comprising a set of cleaning elements (116);
a resonator (710) connected to the drivetrain shaft, wherein the resonator is configured to rotate about a first axis of the oral cleaning device;
a resilient member (720) having a first end (722) and a second end (724) and a pivot point (750), wherein the resilient member is connected, at its first end, to the resonator;
a magnet (730) connected to the second end of the resilient member; and
an electromagnetic assembly (740) comprising first and second conductors (740A, 740B) configured to interact with the magnet to periodically drive the drivetrain shaft and thereby the cleaning unit in a first direction about or along the first axis of the oral cleaning device, the electromagnetic assembly further comprising third and fourth conductors (740C, 740D) configured to interact with the magnet to periodically drive the drivetrain shaft and thereby the cleaning unit in a second direction about or along a second axis of the oral cleaning device,
wherein the second direction is different than the first direction and wherein the second axis is perpendicular to the first axis;
wherein the electromagnetic assembly is configured to cease periodically driving the drivetrain shaft in the first direction while continuing to periodically drive the drivetrain shaft in the second direction; or wherein the electromagnetic assembly is configured to cease periodically driving the drivetrain shaft in the second direction while continuing to periodically drive the drivetrain shaft in the first direction.

10. The drivetrain assembly of claim 9, wherein the set of cleaning elements are configured to move at an amplitude greater than 0.5 mm and less than 3 mm and a frequency greater than 0.25 Hz and less than 520 Hz in the second direction.

11. The drivetrain assembly of claim 9, wherein the electromagnetic assembly is configured to cease periodically driving the drivetrain shaft in the first direction or the second direction in response to user input received at an input (128) in the body portion of the oral cleaning device.

12. The drivetrain assembly of claim 9, wherein the electromagnetic assembly is configured to cease periodically driving the drivetrain shaft in the first direction or the second direction in response to a sensor signal received from a sensor, wherein the sensor signal is indicative of angle information at which the set of cleaning elements are positioned relative to one or more tooth or gum surfaces.

13. The drivetrain assembly of claim 9, wherein the electromagnetic assembly is configured to cease periodically driving the drivetrain shaft in the first direction or the second direction after a certain amount of time has passed during a cleaning routine.

## Patentansprüche

1. Mundreinigungsvorrichtung (100), umfassend:
eine Reinigungseinheit (104), die einen Satz von Reinigungselementen (116) aufweist;
einen Körperabschnitt (102), der mit der Reinigungseinheit gekoppelt ist; und
eine Antriebsstranganordnung (122), die innerhalb des Körperabschnitts angeordnet ist, die Antriebsstranganordnung umfassend:
eine Antriebswelle (124), die mindestens teilweise innerhalb des Körperabschnitts enthalten ist und dazu konfiguriert ist, mit der Reinigungseinheit in Eingriff zu kommen; und
eine elektromagnetische Anordnung (740, 840), die dazu konfiguriert ist: (i) die Antriebswelle und dadurch die Reinigungseinheit periodisch in einer ersten Richtung um oder entlang einer ersten Achse der Mundreinigungsvorrichtung anzutreiben; und (ii) die Antriebswelle und dadurch die Reinigungseinheit periodisch in einer zweiten Richtung um oder entlang einer zweiten Achse der Mundreinigungsvorrichtung anzutreiben, wobei die zweite Richtung sich von der ersten Richtung unterscheidet und wobei die zweite Achse senkrecht zu der ersten Achse ist;
wobei die elektromagnetische Anordnung dazu konfiguriert ist, das periodische Antreiben der Antriebswelle in der ersten Richtung einzustellen, während das periodische Antreiben der Antriebswelle in der zweiten Richtung fortsetzt wird; oder
wobei die elektromagnetische Anordnung dazu konfiguriert ist, das periodische Antreiben der Antriebswelle in der zweiten Richtung einzustellen, während das periodische Antreiben der Antriebswelle in der ersten Richtung fortsetzt wird.

2. Mundreinigungsvorrichtung nach Anspruch 1, wobei der Satz von Reinigungselementen dazu konfiguriert ist, sich mit einer Amplitude von mehr als 0,5 mm und weniger als 3 mm und einer Frequenz von mehr als 0,25 Hz und weniger als 520 Hz in der ersten Richtung oder der zweiten Richtung zu bewegen.

3. Mundreinigungsvorrichtung nach Anspruch 1, wobei die erste Achse eine Mittelachse (A) der Mundreinigungsvorrichtung ist.

4. Mundreinigungsvorrichtung nach Anspruch 1, wobei der Körperabschnitt weiter einen Eingang (128) einschließt, der von einem Benutzer betätigbar ist, um einen Betriebsmodus auszuwählen; und
wobei durch Auswählen des Betriebsmodus die elektromagnetische Anordnung (i) das periodische Antreiben der Antriebswelle in der ersten Richtung einstellt und das periodische Antreiben der Antriebswelle in der zweiten Richtung fortsetzt; oder (ii) das periodische Antreiben der Antriebswelle in der zweiten Richtung einstellt und das periodische Antreiben der Antriebswelle in der ersten Richtung fortsetzt.

5. Mundreinigungsvorrichtung nach Anspruch 1, weiter umfassend:
einen Sensor (140), der dazu konfiguriert ist, Winkelinformationen zu erfassen, bei denen die Reinigungselemente relativ zu einer oder mehreren Zahn- oder Zahnfleischoberflächen eines Mundes eines Benutzers positioniert sind; und
einen Prozessor (132), der dazu konfiguriert ist:
die erfassten Winkelinformationen von dem Sensor zu empfangen;
basierend auf den empfangenen erfassten Winkelinformationen zu bestimmen, dass sich die Reinigungselemente in der Nähe eines Reinigungsbereichs des Mundes des Benutzers befinden; und
einen Betriebsmodus der elektromagnetischen Anordnung auszuwählen, in dem die Antriebswelle nur in der ersten Richtung oder nur in der zweiten Richtung periodisch angetrieben wird.

6. Mundreinigungsvorrichtung nach Anspruch 5, wobei der Reinigungsbereich ein Zahnfleischrandbereich oder ein Interdentalbereich ist.

7. Mundreinigungsvorrichtung nach Anspruch 1, weiter umfassend:
einen Resonator (710, 810), der mit der Antriebswelle verbunden ist, wobei der Resonator dazu konfiguriert ist, sich um die erste Achse zu drehen;
ein elastisches Element (720, 820), das ein erstes Ende (722, 822) und ein zweites Ende (724, 824) und einen Drehpunkt (750, 850) aufweist, wobei das elastische Element an seinem ersten Ende mit dem Resonator verbunden ist; und
einen Magneten (730, 830), der mit dem zweiten Ende des elastischen Elements verbunden ist;
wobei die elektromagnetische Anordnung weiter einen ersten und einen zweiten Leiter (740A, 740B, 840A, 840B) umfasst, die dazu konfiguriert sind, mit dem Magneten zusammenzuwirken, um die Antriebswelle und dadurch die Reinigungseinheit in der ersten Richtung um die erste Achse oder entlang dieser periodisch anzutreiben.

8. Mundreinigungsvorrichtung nach Anspruch 7, wobei die elektromagnetische Anordnung weiter einen dritten und einen vierten Leiter (740C, 740D, 840C, 840D) umfasst, die parallel zu dem ersten und dem zweiten Leiter angeordnet sind, und wobei der dritte und der vierte Leiter dazu konfiguriert sind, mit dem Magneten zusammenzuwirken, um die Antriebswelle und dadurch die Reinigungseinheit in der zweiten Richtung um die zweite Achse oder entlang dieser periodisch anzutreiben.

9. Antriebsstranganordnung (122, 700) für eine Mundreinigungsvorrichtung (100), wobei die Mundreinigungsvorrichtung einen Körperabschnitt (102) aufweist, die Antriebsstranganordnung umfassend:
eine Antriebsstrangwelle (124, 724), die mindestens teilweise innerhalb des Körperabschnitts enthalten ist und dazu konfiguriert ist, mit der Reinigungseinheit (104) in Eingriff zu kommen, die einen Satz von Reinigungselementen (116) umfasst;
einen Resonator (710), der mit der Antriebswelle verbunden ist, wobei der Resonator dazu konfiguriert ist, sich um eine erste Achse der Mundreinigungsvorrichtung zu drehen;
ein elastisches Element (720), das ein erstes Ende (722) und ein zweites Ende (724) und einen Drehpunkt (750) aufweist, wobei das elastische Element an seinem ersten Ende mit dem Resonator verbunden ist;
einen Magneten (730), der mit dem zweiten Ende des elastischen Elements verbunden ist; und
eine elektromagnetische Anordnung (740), die einen ersten und einen zweiten Leiter (740A, 740B) umfasst, die dazu konfiguriert sind, mit dem Magneten zusammenzuwirken, um die Antriebswelle und dadurch die Reinigungseinheit periodisch in einer ersten Richtung um oder entlang einer ersten Achse der Mundreinigungsvorrichtung anzutreiben, wobei die elektromagnetische Anordnung weiter einen dritten und einen vierten Leiter (740C, 740D) umfasst, die dazu konfiguriert sind, mit dem Magneten zusammenzuwirken, um die Antriebswelle und dadurch die Reinigungseinheit periodisch in einer zweiten Richtung um oder entlang einer zweiten Achse der Mundreinigungsvorrichtung anzutreiben,
wobei die zweite Richtung sich von der ersten Richtung unterscheidet und wobei die zweite Achse senkrecht zu der ersten Achse ist;
wobei die elektromagnetische Anordnung dazu konfiguriert ist, das periodische Antreiben der Antriebswelle in der ersten Richtung einzustellen und das periodische Antreiben der Antriebswelle in der zweiten Richtung fortzusetzen; oder wobei die elektromagnetische Anordnung dazu konfiguriert ist, das periodische Antreiben der Antriebswelle in der zweiten Richtung einzustellen und das periodische Antreiben der Antriebswelle in der ersten Richtung fortzusetzen.

10. Antriebsstranganordnung nach Anspruch 9, wobei der Satz von Reinigungselementen dazu konfiguriert ist, sich mit einer Amplitude von mehr als 0,5 mm und weniger als 3 mm und einer Frequenz von mehr als 0,25 Hz und weniger als 520 Hz in der zweiten Richtung zu bewegen.

11. Antriebsanordnung nach Anspruch 9, wobei die elektromagnetische Anordnung dazu konfiguriert ist, als Reaktion auf eine Benutzereingabe, die an einem Eingang (128) im Körperabschnitt der Mundreinigungsvorrichtung empfangen wird, das periodische Antreiben der Antriebswelle in der ersten Richtung oder in der zweiten Richtung einzustellen.

12. Antriebsstranganordnung nach Anspruch 9, wobei die elektromagnetische Anordnung dazu konfiguriert ist, als Reaktion auf ein von einem Sensor empfangenes Sensorsignal das periodische Antreiben der Antriebswelle in der ersten Richtung oder in der zweiten Richtung einzustellen, wobei das Sensorsignal Winkelinformationen angibt, bei denen der Satz von Reinigungselementen relativ zu einer oder mehreren Zahn- oder Zahnfleischoberflächen positioniert ist.

13. Antriebsstranganordnung nach Anspruch 9, wobei die elektromagnetische Anordnung dazu konfiguriert ist, das periodische Antreiben der Antriebswelle in der ersten Richtung oder in der zweiten Richtung einzustellen, nachdem während einer Reinigungsroutine eine bestimmte Zeitspanne verstrichen ist.

## Revendications

1. Dispositif d'hygiène buccale (100), comprenant :
une unité de nettoyage (104) comportant un ensemble d'éléments de nettoyage (116) ;
une partie corps (102) couplée à l'unité de nettoyage ; et
un ensemble de transmission (122) agencé à l'intérieur de la partie corps, l'ensemble de transmission comprenant :
un arbre de transmission (124) contenu au moins partiellement dans la partie corps et configuré pour venir en prise avec l'unité de nettoyage ; et
un ensemble électromagnétique (740, 840) configuré pour : (i) entraîner périodiquement l'arbre de transmission et, de ce fait, l'unité de nettoyage dans une première direction autour d'un premier axe, ou le long de celui-ci, du dispositif d'hygiène buccale ; et (ii) entraîner périodiquement l'arbre de transmission et, de ce fait, l'unité de nettoyage dans une seconde direction autour d'un second axe, ou le long de celui-ci, du dispositif d'hygiène buccale, dans lequel la seconde direction est différente de la première direction et le second axe est perpendiculaire au premier axe ;
dans lequel l'ensemble électromagnétique est configuré pour cesser d'entraîner périodiquement l'arbre de transmission dans la première direction tout en continuant d'entraîner périodiquement l'arbre de transmission dans la seconde direction ; ou
l'ensemble électromagnétique est configuré pour cesser d'entraîner périodiquement l'arbre de transmission dans la seconde direction tout en continuant d'entraîner périodiquement l'arbre de transmission dans la première direction.

2. Dispositif d'hygiène buccale selon la revendication 1, dans lequel l'ensemble d'éléments de nettoyage est configuré pour se déplacer à une amplitude supérieure à 0,5 mm et inférieure à 3 mm et à une fréquence supérieure à 0,25 Hz et inférieure à 520 Hz dans la première direction ou la seconde direction.

3. Dispositif d'hygiène buccale selon la revendication 1, dans lequel le premier axe est un axe central (A) du dispositif d'hygiène buccale.

4. Dispositif d'hygiène buccale selon la revendication 1, dans lequel la partie corps inclut en outre une entrée (128) qui peut être actionnée par un utilisateur pour sélectionner un mode de fonctionnement ; et
en sélectionnant le mode de fonctionnement, l'ensemble électromagnétique (i) cesse d'entraîner périodiquement l'arbre de transmission dans la première direction et continue d'entraîner périodiquement l'arbre de transmission dans la seconde direction ; ou (ii) cesse d'entraîner périodiquement l'arbre de transmission dans la seconde direction et continue d'entraîner périodiquement l'arbre de transmission dans la première direction.

5. Dispositif d'hygiène buccale selon la revendication 1, comprenant en outre :
un capteur (140) configuré pour détecter des informations d'angle auxquelles les éléments de nettoyage sont positionnés par rapport à une ou plusieurs surfaces de dent ou de gencive de la bouche d'un utilisateur ; et
un processeur (132) configuré pour :
recevoir les informations d'angle détectées en provenance du capteur ;
déterminer, sur la base des informations d'angle détectées reçues, que les éléments de nettoyage sont à proximité d'une zone de nettoyage de la bouche de l'utilisateur ; et
sélectionner un mode de fonctionnement de l'ensemble électromagnétique dans lequel l'arbre de transmission est entraîné périodiquement dans la première direction uniquement ou dans la seconde direction uniquement.

6. Dispositif d'hygiène buccale selon la revendication 5, dans lequel la zone de nettoyage est une zone gingivale ou une zone interdentaire.

7. Dispositif d'hygiène buccale selon la revendication 1, comprenant en outre :
un résonateur (710, 810) relié à l'arbre de transmission, dans lequel le résonateur est configuré pour tourner autour du premier axe ;
un élément élastique (720, 820) présentant une première extrémité (722, 822) et une seconde extrémité (724, 824) et un point de pivotement (750, 850), dans lequel l'élément élastique est relié, au niveau de sa première extrémité, au résonateur ; et
un aimant (730, 830) relié à la seconde extrémité de l'élément élastique ;
dans lequel l'ensemble électromagnétique comprend en outre des premier et deuxième conducteurs (740A, 740B, 840A, 840B) configurés pour interagir avec l'aimant pour entraîner périodiquement l'arbre de transmission et, de ce fait, l'unité de nettoyage dans la première direction autour du premier axe ou le long de celui-ci.

8. Dispositif d'hygiène buccale selon la revendication 7, dans lequel l'ensemble électromagnétique comprend en outre des troisième et quatrième conducteurs (740C, 740D, 840C, 840D) agencés en parallèle avec les premier et deuxième conducteurs et dans lequel les troisième et quatrième conducteurs sont configurés pour interagir avec l'aimant pour entraîner périodiquement l'arbre de transmission et, de ce fait, l'unité de nettoyage dans la seconde direction autour du second axe ou le long de celui-ci.

9. Ensemble de transmission (122, 700) pour un dispositif d'hygiène buccale (100), le dispositif d'hygiène buccale comportant une partie corps (102), l'ensemble de transmission comprenant :
un arbre de transmission (124, 724) contenu au moins partiellement dans la partie corps et configuré pour venir en prise avec une unité de nettoyage (104) comprenant un ensemble d'éléments de nettoyage (116) ;
un résonateur (710) relié à l'arbre de transmission, dans lequel le résonateur est configuré pour tourner autour d'un premier axe du dispositif d'hygiène buccale ;
un élément élastique (720) présentant une première extrémité (722) et une seconde extrémité (724) et un point de pivotement (750), dans lequel l'élément élastique est relié, à sa première extrémité, au résonateur ;
un aimant (730) relié à la seconde extrémité de l'élément élastique ; et
un ensemble électromagnétique (740) comprenant des premier et deuxième conducteurs (740A, 740B) configurés pour interagir avec l'aimant pour entraîner périodiquement l'arbre de transmission et, de ce fait, l'unité de nettoyage dans une première direction autour du premier axe, ou le long de celui-ci, du dispositif d'hygiène buccale, l'ensemble électromagnétique comprenant en outre des troisième et quatrième conducteurs (740C, 740D) configurés pour interagir avec l'aimant pour entraîner périodiquement l'arbre de transmission et, de ce fait, l'unité de nettoyage dans une seconde direction autour d'un second axe, ou le long de celui-ci, du dispositif d'hygiène buccale,
dans lequel la seconde direction est différente de la première direction et dans lequel le second axe est perpendiculaire au premier axe ;
dans lequel l'ensemble électromagnétique est configuré pour cesser d'entraîner périodiquement l'arbre de transmission dans la première direction tout en continuant d'entraîner périodiquement l'arbre de transmission dans la seconde direction ; ou dans lequel l'ensemble électromagnétique est configuré pour cesser d'entraîner périodiquement l'arbre de transmission dans la seconde direction tout en continuant d'entraîner périodiquement l'arbre de transmission dans la première direction.

10. Ensemble de transmission selon la revendication 9, dans lequel l'ensemble d'éléments de nettoyage est configuré pour se déplacer à une amplitude supérieure à 0,5 mm et inférieure à 3 mm et à une fréquence supérieure à 0,25 Hz et inférieure à 520 Hz dans la seconde direction.

11. Ensemble de transmission selon la revendication 9, dans lequel l'ensemble électromagnétique est configuré pour cesser d'entraîner périodiquement l'arbre de transmission dans la première direction ou la seconde direction en réponse à une entrée d'utilisateur reçue au niveau d'une entrée (128) dans la partie corps du dispositif d'hygiène buccale.

12. Ensemble de transmission selon la revendication 9, dans lequel l'ensemble électromagnétique est configuré pour cesser d'entraîner périodiquement l'arbre de transmission dans la première direction ou la seconde direction en réponse à un signal de capteur reçu d'un capteur, dans lequel le signal de capteur indique des informations d'angle auxquelles l'ensemble d'éléments de nettoyage est positionné par rapport à une ou plusieurs surfaces de dent ou de gencive.

13. Ensemble de transmission selon la revendication 9, dans lequel l'ensemble électromagnétique est configuré pour cesser d'entraîner périodiquement l'arbre de transmission dans la première direction ou la seconde direction après qu'un certain laps de temps s'est écoulé pendant une routine de nettoyage.
